# EUROPEAN PATENT APPLICATION

(11) **EP 2 071 259 A2**
(43) Date of publication of application: **17.06.2009**
(21) Application number: 08171371.1
(22) Date of filing: 11.12.2008
(51) Int. Cl.: F25D 23/00

(54) **Filter**

(30) Priority: 13.12.2007 GB 0724328
(71) Applicant: Coca-Cola Enterprises Ltd., Uxbridge Middlesex UB8 1EZ (GB)
(72) Inventor: Howlett, John, Milton Keynes, Buckinghamshire MK13 9HN (GB)
(74) Representative: Howell, Matthew Dafydd

(57) **Abstract**

There is described a refrigeration apparatus including a refrigeration unit (3), the refrigeration unit having an evaporator (15), a condenser (14), and a compressor (13) operable to draw refrigerant from the evaporator and deliver it to the condenser. The refrigeration unit (3) further comprises a fan (12) operable to establish an airflow over the condenser (14), and a self-cleaning filter assembly (18) for removing particles from the airflow upstream of the condenser (14). The filter assembly (18) comprises a pair of rollers (25,26) mounted to a frame, an endless belt of filter material (31) passing closely round the rollers, and drive means (27) operable to rotate the rollers. Cleaning means are positioned to engage the filter material (31) to remove particles from the filter material.

## Description

### Introduction

The invention relates to filters. More specifically the invention relates to air filters to be used in refrigeration systems. In particular, the invention relates to filters to be used in commercial refrigeration apparatus of the type found in shops for the purpose of chilling products, such as chiller cabinets, refrigerators and freezers.

In a domestic refrigerator, heat is drawn from the contents of the refrigerator by an evaporator panel position within the refrigerator, and this heat is dissipated in a condenser coil, usually situated on the rear outer surface of the refrigerator. The condenser coil generally comprises a serpentine duct containing the refrigerant fluid, and is typically cooled by natural convection. The low speed of the convection airflow over the coil does not cause much entrainment of dust in the airflow, and therefore there is no need for dust filtering.

A commercial chiller cabinet comprises a chilled storage area with an open front section so that there is no impediment to the removal of chilled products from the storage area. Commercial chiller cabinets are effectively used to chill impulse-buy products, such as carbonated drinks and juices.

Commercial refrigerators maintain an internal temperature below ambient to keep products stored therein fresh and to extend their shelf life. It is typical for a refrigerator to maintain an internal temperature in the range of 2 to 8 degrees Celsius. In an example of a shop refrigerator, glass doors are provided to allow customers to view the products stored therein.

Commercial freezers are intended to keep the products stored therein frozen. It is typical for a freezer to maintain an internal temperature in the range of 0 to -18 degrees Celsius. In examples of a shop refrigerator, glass doors are provided to allow customers to view the products stored therein.

Commercial refrigeration apparatus the types described above comprise a chilled storage area and a refrigeration unit which produces a circulation of cold air to cool products stored in the chilled storage area. The refrigeration unit may be an integral part of the apparatus, or it may be removable to simplify repair or replacement of faulty refrigeration units or parts. The refrigeration unit is generally located at the bottom of the apparatus, at or near ground level, and comprises a compressor, a condenser and an evaporator.

Within the refrigeration apparatus there are two distinct air flows. In the first air flow, air is drawn in through the front of the apparatus by a fan, at or near ground level, and passed through the condenser to remove heat. The air is warmed as it passes through the condenser, and is expelled through the rear of the apparatus. In the second air flow, air is drawn from the chilled storage area by a fan and passed through the evaporator, the air being cooled in the process. The cool air is then circulated through the chilled storage area of the apparatus to chill products therein, before returning to the refrigeration unit to be passed again through the evaporator. The refrigeration unit is thermoststically controlled, the operation of the compressor and fans being controlled on the basis of one or more temperature sensor placed in the chilled storage area. The refrigeration unit will typically also include means to detect overheating of the compressor or condenser, and control means to stop operation of the compressor if overheating is detected.

It has been observed in shops that the movement of customers and staff across the shop floor disturbs dust and other particles, which become airborne. Levels of airborne dust are particularly high shortly after the shop opens for trading after a period of inactivity. These occurrences of high levels of airborne particles are known as "dust events". The air which is drawn in through the front of the chilled storage cabinet, at or near ground level, will contain dust and other particles which were disturbed during the dust event.

The condenser is a heat exchanger comprising a matrix of passages through which air can flow. The dust and particles in the air which passes through the matrix are deposited on its surface. As the amount of dust and particles deposited on the condenser increases, the free flow of air through the condenser is impeded. This will eventually lead to a reduction in the heat exchange capability of the condenser, and may cause overheating and malfunction in the refrigeration unit.

Regular cleaning of the condenser matrix is required to avoid this problem. The cleaning operation requires the front panel of the apparatus to be removed, to afford access to the condenser for the removal of dust and other particles. The cleaning task is time-consuming, but must be performed thoroughly and regularly. An objective of the invention is therefore to avoid the task of cleaning the condenser, by providing means to inhibit the deposit of dust and other particles on the matrix.

A fixed filter arrangement comprising a filter element may be used to remove particles from air being drawn through the condenser. The filter element becomes clogged with the particles it removes from the airflow, and so must be cleaned or replaced with approximately the same regularity as the matrix would have had to be cleaned in the absence of the fixed filter arrangement.

It is known to use moving filter arrangements in air conditioning systems to extend the period between filter replacements. Typically, a moving filter arrangement comprises a length of filter material which extends across an airflow from a supply roll to a take-up roll. The filter material is transferred from the supply roll to the take-up roll by rotation of the respective rolls. As the filter material advances, used areas of filter material are replaced with fresh filter material, until no more of the filter material can be transferred from the supply roll. The period between filter replacements is determined by the amount, and rate of advance, of the filter material on the supply roll. Although filter replacement is less frequent than for fixed filters, the costs associated with purchasing, installing and maintaining moving filter arrangements are however higher than the equivalent costs associated with fixed filter arrangements.

It will be appreciated that all though the condenser itself does not need to be cleaned when fixed filter arrangements or moving filter arrangements are used, components of the filter arrangement must nevertheless be replaced or serviced regularly.

One aim of the present invention is to provide a self-cleaning filter assembly for commercial refrigerators, freezers, and chilled storage cabinets to substantially remove particles from the air drawn through the condenser.

According to a first aspect of the invention there is provided a refrigeration apparatus in which a refrigerant fluid is cooled in a condenser by a forced airflow, the refrigeration apparatus further comprising a filter assembly in the airflow upstream of the condenser, the filter assembly comprising an endless belt of filter material arranged so that at least one run of the belt passes across the airflow, and the filter assembly further including cleaning means arranged to remove material from the filter material.

The refrigeration apparatus may be a commercial refrigerator, freezer, or chilled storage cabinet.

A second aspect of the invention provides a filter assembly for a refrigeration apparatus, the filter assembly comprising a frame, a pair of parallel rolls mounted to the frame, drive means to rotate the rolls, and an endless belt of filter material passing closely round the rolls, cleaning means being positioned adjacent the filter material to remove particles deposited on the filter material.

A third aspect of the invention concerns a refrigeration unit for a commercial refrigeration apparatus in which a refrigerant fluid is cooled by a forced airflow through a condenser, the refrigeration unit further comprising a filter assembly having a frame, a pair of parallel rolls mounted to the frame, drive means to rotate the rolls, and an endless belt of filter material passing closely round the rolls, cleaning means being positioned adjacent the filter material to remove particles deposited on the filter material. The cleaning means is preferably positioned adjacent one of the rolls.

Preferably, the endless belt of filter material comprises front and rear runs of filter material, the forced airflow impinging first on the front run of the filter material and then passing through the rear run of filter material. The cleaning means preferably engages the filter material at a region of the front run which has just passed through the airflow.

The cleaning means is, in one embodiment, a rotating brush whose bristles are in contact with the filter material and move relative to the filter material to remove deposited particles therefrom. The bristles in contact with the filter material preferably move in a direction opposite to the direction of advance of the filter material.

The filter material is preferably a mesh, but may be a woven or non-woven fabric.

An embodiment of the present invention will now be described in detail, with reference to the accompanying drawings, in which:
Figure 1 shows a schematic perspective view of a chiller cabinet; and
Figure 2 is a schematic perspective view of a self-cleaning filter assembly for chiller cabinets.

### Description

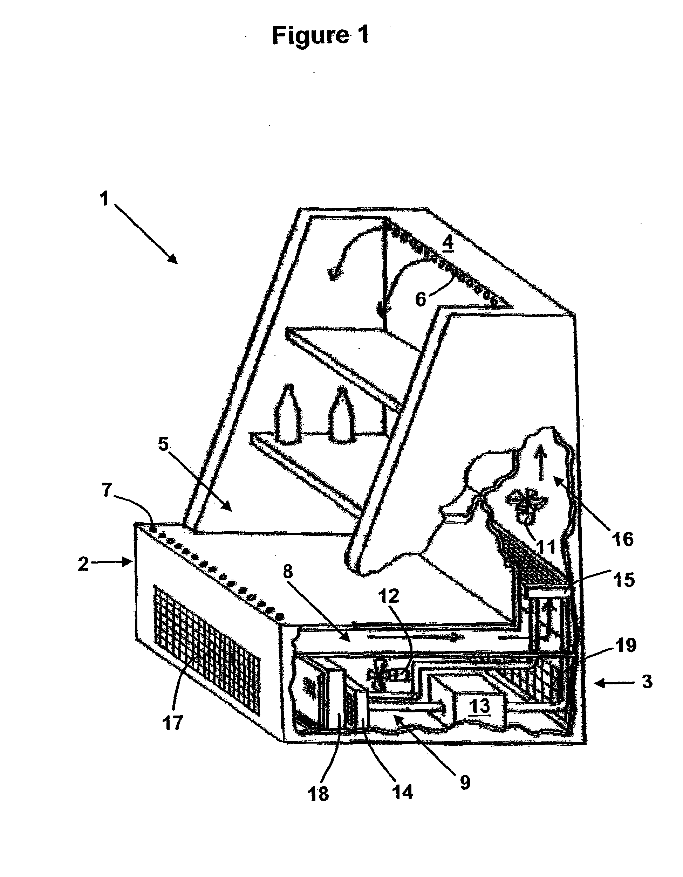

Figure 1 schematically shows a commercial chiller cabinet 1. The chiller cabinet 1 comprises a base housing 2, which accommodates a refrigeration unit 3. Upstanding from the base housing 2 are a rear wall 4 and a pair of side walls. The rear wall 4 is disposed along an upper rear edge of the base housing, while each side wall is disposed along a respective upper end of the base housing. The rear wall 4 and side walls together define a storage area 5 located above the base housing.

The storage area 5 further comprises two shelves, extending between the side walls. In the rear wall 4 above the uppermost shelf, there are provided air outlet holes 6. Further air outlet holes may optionally be formed in rear wall 4 adjacent the shelves. Along the front edge of the upper face of the base housing 2 a number of air intake holes 7 are formed.

The base housing 2 is divided horizontally into upper and lower regions 8 and 9, in which respective airflows are established, driven by upper and lower fans 11 and 12. The refrigeration unit 3 comprises a compressor 13 and a condenser 14 located within the lower region 9, and an evaporator 15 located within the upper region 8. The compressor, condenser 14 and evaporator 15 are arranged to form a refrigeration circuit which, when the compressor 13 operates, causes the condenser 14 to heat up and the evaporator 15 to cool down.

The upper fan 11 draws air from the storage area 5 into the upper region 8 of the base housing 2, through the intake holes 7 along the front edge of the upper face of the base housing 2. This air is then drawn through the evaporator 15, where it is cooled. The cooled air is then propelled along an air duct 16 in the rear wall 4 and is discharged into the storage area 5 through the outlet holes 6 in the top of the rear wall 4. The circulation of this cold air through the storage area 5 causes cooling of products in the storage area 5.

The lower fan 12 draws air into the lower region 9 of the base housing 2 through a front grill 17 in the front wall of the base housing 2, at or near ground level. This air is then drawn through a self-cleaning filter arrangement 18 and then through the condenser 14, where it is heated before being expelled through a rear grill 19 in the rear of the base housing 2. It will be understood that, in contrast to the illustrated embodiment, the lower fan 12 may be placed upstream of either the condenser 14 or of the filter arrangement 18, to establish the airflow through the filter arrangement and condenser.

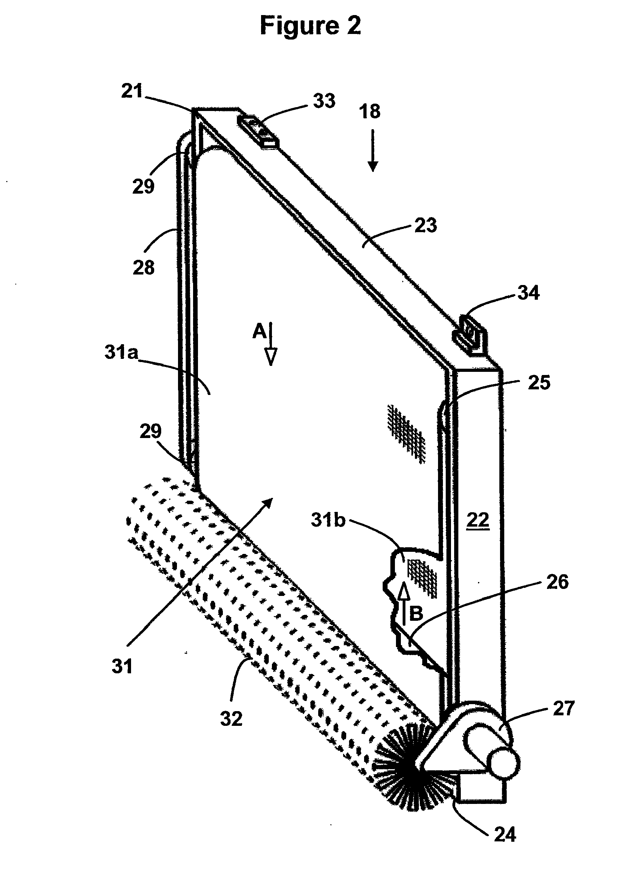

Figure 2 schematically shows the self-cleaning filter arrangement 18 of Figure 1. The filter arrangement 18 is generally rectangular in front view, having a rectangular frame with left and right end members 21 and 22, and upper and lower side members 23 and 24.

Upper and lower rollers 25 and 26 are provided respectively alongside side members 23 and 24, between the end members 21 and 22. In the illustrated embodiment, the rollers 25 and 26 have substantially the same diameter. Fixing means are provided on the end members to mount the respective rollers to the frame such that they can be rotated around their axes.

A motor 27 is provided on the right end member 22 to rotate the lower roller 26. A drive belt 28 passing over pulleys 29 connects the rollers 25 and 26 such that the upper roller 25 is rotated in the same sense and at substantially the same speed as the lower roller 26. In a preferred embodiment the drive belt 28 is a v-belt. In alternative embodiments the drive belt 28 could be a toothed belt, or the pulleys 29 could be replaced by sprockets and the drive belt 28 by a chain. In an alternative embodiment, (not illustrated) each roller 25 and 26 may be rotated by a respective motor.

A continuous belt of filter material 31 is closely engaged around the two rollers 25 and 26, such that the belt of filter material 31 advances when the rollers 25 and 26 rotate. The belt has a front run 31a located near the front grill 17 and a rear run 31b located near the condenser 14. In a preferred embodiment the filter material 31 is a mesh. The size of the holes in the mesh is preferably in the range of 0.5 mm to 2 mm. More preferably, the holes in the mesh are approximately 1 mm across. As air is drawn through the filter arrangement 18 by the lower fan 12, dust and other particles are deposited on the belt of filter material 31, removing them from the airflow.

A cylindrical brush 32 is provided alongside the lower side member 24, and contacts an area of the filter material 31 which is also engaged by the lower roller 26. Alternatively, the brush 32 may engage an area of the filter material 31 which is not in contact with either of the rollers 25 and 26. The relative movement of the brush 32 and the filter material 31 causes dust and other particles deposited on the filter material 31 to be removed by the brush 32.

In one embodiment the brush 32 comprises a solid cylindrical core, on which a helical bristle strip is mounted. In order for the entire width of the belt of filter material 31 to be cleaned each time it passes the brush location, the brush 32 must be rotated so that the helical bristle strip advances by one axial pitch distance as the filter belt material 31 passes through the area of contact between the brush 31 and the filter belt.

In the illustrated embodiment the brush 32 is cylindrical in form, with radial bristles extending over its entire length and circumference. It will be appreciated that many suitable alternative brush shapes exist. The brush 32 may be rotated such that the bristles in contact with the filter belt are moving in the direction opposite to the direction of advance of the filter belt. Alternatively, the brush 32 may be rotated so that the bristles move in the same direction as the direction of advance of the filter belt, but with a speed which differs from the speed of advance of the belt. In an advantageous embodiment, the brush 32 is rotated in the same sense as the rollers 25 and 26, and at twice their rotational speed.

The brush 32 may be rotated by the same motor 27 as rotates the rollers 25 and 26 to advance the filter belt, by means of a drive transmission. Alternatively, the brush 32 may have its own motor (not illustrated), and control means may be provided so that the direction and speed of the brush may be selected independently of the direction and speed of advance of the filter belt.

In a further alternative embodiment, (not illustrated) the brush may simply be a fixed array of bristles which are arranged in contact with the filter belt, relative movement of the belt past the brush providing the cleaning effect.

In operation, as the lower fan 12 draws air in through the front grill 17, the motor 27 is operated to rotate the rollers 25 and 26, such that the front run 31a of the filter belt 31 moves downwardly (in the direction of a row A in Figure 2), towards the brush 32. While it is possible to drive the belt 31 in the opposite sense, this will result in particles trapped on the front run 31a of the belt being transported upwardly, over at the upper roller 25, and down the rear run 31b of the belt. As the particles travel down the rear run of the belt, the airflow will tend to pick particles of the mesh and deposit them into the condenser. It is therefore preferred to drive the filter belt 31 so that the front run of the belt 31a moves towards the brush 32.

Particles and fibres in the air stream are caught on the mesh belt 31, and are transported downwardly to the brush 32. The brush 32 is rotated such that the bristles in contact with the mesh belt 31 move upwardly, and remove the fibres and dust particles from the mesh belt. The cleaned belt then passes round the roller 26 and moves upwardly (in the direction of a row B in Figure 2) as the rear run 31b to the upper roller 25, where its direction is again reversed and the belt is again exposed to the particle-laden airflow. The particles removed from the belt 31 by the brush 32 collect on the floor of the base housing, or may be discharged from the base housing through an opening (not illustrated). Provision may be made for, for example, a vacuum cleaner suction hose to be applied to the base housing in order to remove the accumulated dust and fibres.

Although the filter mesh belt 31 does not remove all of the fibres and dust from the air stream, it has been found that accumulation of dirt and fibres on the condenser matrix is significantly reduced, with smaller particles tending to pass through the condenser matrix and be exhausted through the rear grill 19. Unexpectedly, tests have shown that smaller particles tend to accumulate behind the chiller, transported them by the airflow through the rear grill 19, rather than on the condenser matrix.

In the embodiment described and illustrated, the mesh belt moves vertically between a pair of horizontally-extending rollers. It is also envisaged that the mesh belt 31 may be moved horizontally between a pair of vertically-extending rollers, and in such an arrangement the brush 32 will be mounted so as to extend vertically in order to clean the surface of the filter mesh belt 31.

In a further alternative arrangement, the mesh belt may be passed over pairs of obliquely-arranged rollers instead of single rollers to change its direction, so that the oppositely-moving runs of the belt are in the same plane and side-by-side. In such an arrangement, the air stream will pass through the mesh belt in only one direction, depositing all particles on the same side of the belt. By having the moving runs of the belt in the same plane, the "thickness" of the filter arrangement in the airflow direction is reduced.

Control of the operation of the filter arrangement 18 may be effected in different ways, in accordance with the needs of the operator of the cooler. If a low-cost control installation is required, the motor 27 of the filter arrangement 18 may simply be connected to the power supply for the refrigeration unit 3, so that the filter belt 31 is continuously advanced whenever the refrigeration unit 3 is powered on. This will however result in the filter belt moving continuously, even when the thermostatic control of the refrigeration unit 3 has cut in to stop the compressor and lower fan 12.

In a more complicated expensive installation, control means can be provided so that the filter belt is only advanced when the refrigeration unit 3 is running, and the lower fan 12 is operating to draw air over the condenser 14. The filter belt will then be operated only intermittently, reducing wear on the components of the filter arrangement 18. The control of the motor 27 for the filter arrangement 18 may be linked to the thermostatic control circuit for the refrigeration unit 3, or alternatively the power supply to the motor 27 of the filter arrangement 18 may be linked to the power supply to the lower fan 12 which draws air over the condenser 14 so that the filter mesh belt 31 is only driven when the lower fan 12 is operating to draw a through the condenser 14.

In a further alternative embodiment, the filter arrangement 18 may include a timing circuit and control inputs to enable the user to set the unit for intermittent operation independently of the operation of the refrigeration unit 3. By providing this independent control without the need to connect to the chiller cabinet 1 control circuitry, the filter arrangement 18 may be easily mounted to and removed from an existing chiller cabinet 1 with minimum disturbance of the electrical circuitry of the cabinet.

In the commercial refrigeration apparatus described above, the base housing and refrigerating unit may be configured such that the refrigeration unit 3 is removable from the base housing, for servicing, repair or replacement. Such a removable refrigeration unit 3 may be provided with a filter arrangement 18, as part of the removable refrigeration unit.

The filter unit 18 may alternatively be supplied as a retro-fit assembly, for fixing adjacent the condenser of an existing refrigeration circuit with forced air cooling of the condenser. In such an arrangement, the frame of the filter unit may be provided with fixtures such as magnetic clamps 33 or brackets 34 to hold the filter unit 18 in position adjacent the condenser 14 of the refrigeration unit.

## Claims

1. A refrigeration apparatus comprising:
a storage area for receiving articles to be chilled; and
a refrigeration unit comprising:
an evaporator;
a condenser;
a compressor, which is operable to draw refrigerant from the evaporator and deliver it into the condenser;
a fan operable to establish an airflow over the surfaces of the condenser; and
a self-cleaning filter assembly for removing particles from the airflow upstream of the
condenser, the filter assembly comprising:
a frame;
a pair of rollers mounted to the frame, an endless belt of filter material passing closely round the rollers;
drive means operable to rotate the rollers; and
cleaning means positioned to engage the filter material, operable to remove particles from the filter material.

2. A refrigeration apparatus according to claim 1, wherein the endless belt of filter material comprises a mesh.

3. A refrigeration apparatus according to claim 2, wherein the size of the holes in the mesh is in the range of 0.5 mm to 2 mm.

4. A refrigeration apparatus according to any preceding claim, wherein the drive means operable to rotate the rollers comprises a motor coupled to one roller and a drive belt connecting the two rollers.

5. A refrigeration apparatus according to any of claims 1 to 3, wherein the drive means operable to rotate the rollers comprises a respective motor coupled to each roller.

6. A refrigeration apparatus according to any preceding claim, wherein the endless belt of filter material comprises a front run of filter material and a back run of filter material, and wherein the front run of filter material moves towards the cleaning means when the rollers are rotating.

7. A refrigeration apparatus according to any preceding claim, wherein the cleaning means is a brush which engages a region of the front run of filter material, and wherein relative movement between the brush and the region of the front run of filter material it engages causes particles on said region to be removed.

8. A refrigeration apparatus according to claim 7, wherein the brush is static and the relative movement between the brush and the region of the front run of filter material it engages is due to movement of the belt of filter material.

9. A refrigeration apparatus according to claim 7, wherein the brush is a rotating brush, and wherein the refrigeration apparatus further comprises brush drive means operable to rotate the brush such that there is relative movement between the brush and the region of the front run of filter material it engages.

10. A refrigeration apparatus according to claim 9, wherein the brush drive means comprises a motor.

11. A refrigeration apparatus according to claim 9, wherein the brush drive means comprises a drive belt connected to the drive means operable to rotate the rollers.

12. A self-cleaning filter assembly for refrigeration apparatus, the self-cleaning filter assembly comprising a frame on which are provided:
a pair of rollers, an endless belt of filter material passing closely round the rollers;
drive means operable to rotate the rollers;
cleaning means positioned to engage the filter material, operable to remove particles from the filter material.

13. A self-cleaning filter assembly according to claim 12, wherein the endless belt of filter material comprises a mesh.

14. A self-cleaning filter assembly according to claim 13, wherein the size of the holes in the mesh is in the range of 0.5 mm to 2 mm.

15. A self-cleaning filter assembly according to any of claims 12 to 14, wherein the drive means operable to rotate the rollers comprises a motor coupled to one roller and a drive belt connecting the two rollers.

16. A self-cleaning filter assembly according to any of claims 12 to 14, wherein the drive means operable to rotate the rollers comprises a respective motor coupled to each roller.

17. A self-cleaning filter assembly according to any of claims 12 to 16, wherein the endless belt of filter material comprises a front run of filter material and a back run of filter material, and wherein the front run of filter material moves towards the cleaning means when the rollers are rotating.

18. A self-cleaning filter assembly according to any of claims 12 to 17, wherein the cleaning means is a brush which engages a region of the front run of filter material, and wherein relative movement between the brush and the region of the front run of filter material it engages causes particles deposited on said region to be removed.

19. A self-cleaning filter assembly according to claim 18, wherein the brush is static and the relative movement between the brush and the region of the front run of filter material it engages is due to movement of the belt of filter material.

20. A self-cleaning filter assembly according to claim 18, wherein the brush is a rotating brush, and further comprising drive means operable to rotate the brush such that there is relative movement between the brush and the region of the front run of filter material it engages.

21. A self-cleaning filter assembly according to claim 20, wherein the drive means operable to rotate the brush comprises a motor.

22. A self-cleaning filter assembly according to claim 20, wherein the drive means operable to rotate the brush comprises a drive belt connected to the drive means operable to rotate the rollers.

23. A self-cleaning filter assembly according to any of claims 12 to 22, comprising magnetic fixing means for removably fixing the filter assembly to a refrigeration unit.

24. A refrigeration unit for a refrigeration apparatus, the refrigeration unit comprising:
an evaporator;
a condenser;
a compressor, which is operable to draw refrigerant from the evaporator and deliver it into the condenser;
a fan operable to establish an airflow upstream of the condenser; and
a self-cleaning filter assembly according to any of claims 13 to 23.

25. A refrigeration unit according to claim 24 wherein the refrigeration unit can be removably fitted to a refrigeration apparatus.
